# EUROPÄISCHE PATENTSCHRIFT

(11) **EP 1 075 396 B1**
(45) Veröffentlichungstag und Bekanntmachung des Hinweises auf die Patenterteilung: **30.01.2002**
(21) Anmeldenummer: 99914526.1
(22) Anmeldetag: 22.03.1999
(51) Int. Cl.: B60K 41/14

(54) **TRIEBSTRANGMANAGEMENTFUNKTION EINES FAHRZEUGS MIT CVT-GETRIEBE**
DRIVE TRAIN MANAGEMENT FUNCTION OF A VEHICLE HAVING CONTINUOUSLY VARIABLE (CVT) TRANSMISSION
FONCTION DE GESTION DE LA CHAINE CINEMATIQUE D'UN VEHICULE A TRANSMISSION CONTINUE VARIABLE

(30) Priorität: 30.04.1998 DE 19819481
(43) Veröffentlichungstag der Anmeldung: 14.02.2001
(73) Patentinhaber: Volkswagen Aktiengesellschaft, 38436 Wolfsburg (DE)
(72) Erfinder: BOSSE, Rolf, D-38440 Wolfsburg (DE)
(86) Internationale Anmeldenummer: EP9901880
(87) Internationale Veröffentlichungsnummer: WO9956980

(56) Entgegenhaltungen:
- DE-A- 3 928 875
- DE-A- 19 747 128
- US-A- 4 507 986
- US-A- 4 699 025
- US-A- 5 468 195
- US-A- 5 655 992

## Beschreibung

Die Erfindung betrifft eine Triebstrangmanagementfunktion eines Fahrzeugs mit einem CVT-Getriebe (stufenloses Getriebe) und insbesondere betrifft die Erfindung eine Regelung eines Triebstrangs, mit der dessen Emission vermindert wird.

Bei derzeitigen Kraftfahrzeugen, insbesondere Kraftfahrzeugen mit einem direkteinspritzenden Motor, beispielsweise einem Dieselmotor, wird eine Drehzahlerhöhung des Motors durch eine kontinuierlichen Erhöhung der Einspritzmenge des Kraftstoffs bewirkt. Dabei wird der rückkoppelnde Einfluß des Getriebes auf die Drehzahl im allgemeinen nicht berücksichtigt.

Nachteilig bei der üblichen Regelung der Einspritzmenge ist, daß dabei Gebiete mit einer schlechten Charakteristik der Schadstoffemission durchfahren werden können, d.h. das Ernissionsverhalten des Triebstrangs und damit des Kraftfahrzeugs kann schlecht sein. Dies trifft insbesondere bei dem Anfahrverhalten eines Kraftfahrzeuges zu.

US-A-5,655,992 beschreibt ein Steuersystem für ein motorgetriebenenes Kraftfahrzeug mit einem CVT-Getriebe, in dem durch die Verstellung des Zündzeitpunktes der NOx-Ausstoß und der Kraftstoffverbrauch bei gleichbleibender Leistung in wechselseitiger Abhängigkeit voneinander variiert werden können, wobei sich die Drehzahl des Motors ändert.

US-A-5,468,195 beschreibt eine Vorrichtung und ein Verfahren zum Steuern eines mit einem Brennkraftmotor und einem CVT-Getriebe ausgerüsteten Kraftfahrzeugs, wobei das Kraftstoff/Luft-Verhältnis zur Veränderung des erzeugten Drehmoments gesteuert wird, um einen Anstieg der NOx-Emission zur Zeit der Änderung des Kraftstoff/Luft-Verhältnisses zu verhindern.

Auch bei den oben genannten beiden Systemen ist insbesondere beim Anfahren das Durchlaufen eines Gebiets mit schlechter NOx-Emissions-Charakteristik möglich.

Der Erfindung liegt daher die Aufgabe zugrunde, ein Verfahren und eine Vorrichtung zu schaffen, mit der das Emissionsverhalten eines Triebstrangs verbessert wird.

Die Aufgabe wird durch die Merkmale des Verfahrensanspruchs 1 und des Vorrichtungsanspruchs 6 gelöst. Bevorzugte Ausgestaltungen der Erfindung sind Gegenstand der Unteransprüche.

In dem erfindungsgemäßen Verfahren zum Vermindern der Emissionen bei aus einem Einspritz-Motor mit einem steuerbaren Drehmomentaufbau sowie einem CVT-Getriebe bestehenden Triebstrang werden Bereiche hoher Emissionen in einem Emissionskennfeld beim Beschleunigen durch geeignetes Steuern des Drehmomentaufbaus umgangen, in dem die Einspritzmenge an Kraftstoff für mindestens einen Drehzahlbereich begrenzt wird. Dabei kann die Mengenbegrenzung der Einspritzmenge in Form einer Kennlinie vorliegen, die die Begrenzungsmenge als Funktion der Drehzahl wiedergibt.

Weiterhin kann die Einspritzmenge als Funktion der Motor- und/oder Getriebetemperatur begrenzt werden, wobei die Funktion der Motor- und/oder Getriebetemperatur in Form eines Faktors mit der Begrenzungsmenge einer bestimmten Drehzahl multipliziert werden kann. In einer bevorzugten Ausführungsform ist der Faktor eine Zahl des geschlossenen Intervalls [0, 1].

Eine erfindungsgemäße Vorrichtung zur Durchführung des obigen Verfahrens weist eine Steuereinheit des Triebstrang auf, wobei die Steuereinheit die Mengenbegrenzungskennlinie und die Temperaturkennlinie des Motors und/oder des Getriebes gespeichert hat. Vorzugsweise weist die Vorrichtung ein Mittel zum Begrenzen der Kraftstoffeinspritzung auf.

Die Erfindung wird nachfolgend anhand der Zeichnungen näher erläutert.

Fig. 1 zeigt die Darstellung des Anfahrverlaufs in einem Emissionskennfeld mit einer Einspritzmengenreduzierung und ohne diese Reduzierung, Figuren 2a -d zeigen den Verlauf einer Beschleunigungsphase für ein handgeschaltetes Getriebe ohne Mengenreduzierung sowie ein CVT-Getriebe mit Mengenreduzierung für verschiedene Parameter, und

Fig. 3 zeigt ein Blockdiagramm der Mengenbegrenzung.

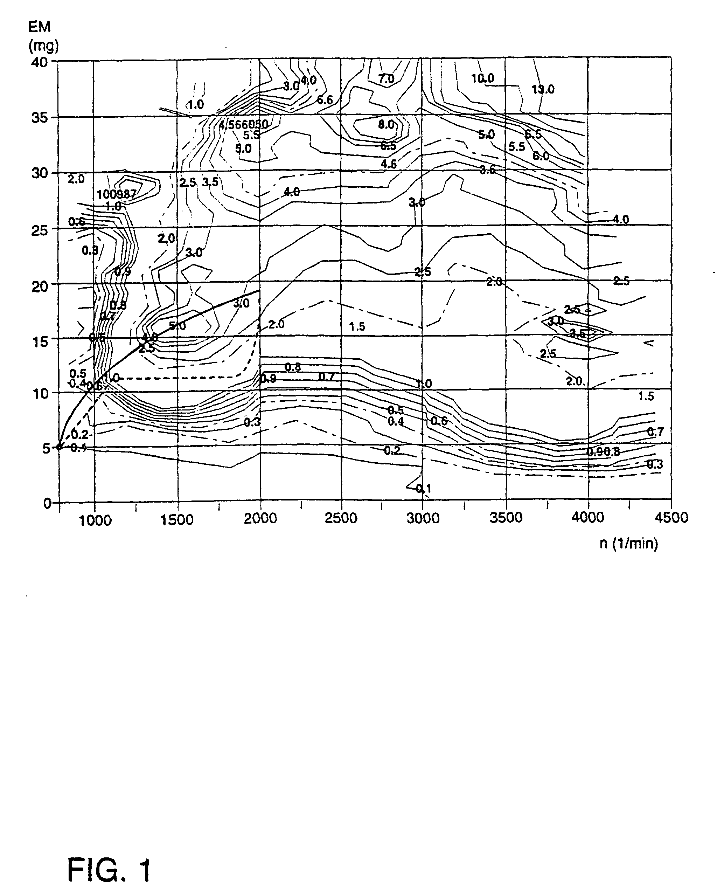

Fig. 1 zeigt die Darstellung eines Emissionskennfeldes. Aufgetragen ist die Einspritzmenge EM mit der Einheit mg gegenüber der Drehzahl n mit der Einheit 1/min. Die Emission eines beliebigen Schadstoffs, im vorliegenden Fall handelt es sich um die Partikelemission eines Dieselmotors, ist hier in der Form von Höhenlinien dargestellt, wobei die zu den Höhenlinien gehörenden Zahlen frei gewählte Einheiten darstellen. Da es sich hier um ein Kennfeld handelt, an dem nur die Auswirkung der Mengenbegrenzung verdeutlicht werden soll, ist auch die Art der Emission, beispielsweise Anzahl der emittierten Partikel, NOx-Emission usw., nicht von Bedeutung. Deutlich in dem Kennfeld erkennbar ist ein "Emissionsberg" mit dem Spitzenwert 5,0 bei einer Drehzahl von ungefähr 1.500 sowie einer Einspritzmenge von ca. 16 mg. Die durchgezogene Linie gibt einen Anfahrvorgang ohne eine Mengenbegrenzung des eingespritzten Kraftstoffs wieder. Es ist deutlich zu erkennen, daß die dargestellte Kurve quasi den Emissionsberg überfährt, d.h. über den Emissionsberg bei der gewählten Beschleunigung verläuft, was zu einem schlechten Emissionsverhalten führt.

Die Emission wird begrenzt, wenn der dargestellte Emissionsberg durch eine Mengenbegrenzung des eingespritzten Kraftstoffs auf ca. 12 mg für eine Drehzahl < 1.700 Umdrehungen pro Minute begrenzt wird. Dadurch wird der Emissionsberg praktisch umfahren, wie dies durch die gestrichelte Kurve wiedergegeben wird. Dazu ist allerdings ein CVT-Getriebe notwendig, das eine möglichst schnelle Verstellung der Motordrehzahl garantiert, da der Drehzahlbereich von 1.700 bis 2.000 im dargestellten Beispiel mit einer schnellen Erhöhung der Einspritzmenge verbunden ist. Die Messung wurde an einem TDI-Motor der US-Ausführung mit 1,91 Hubraum und 66KW Leistung.

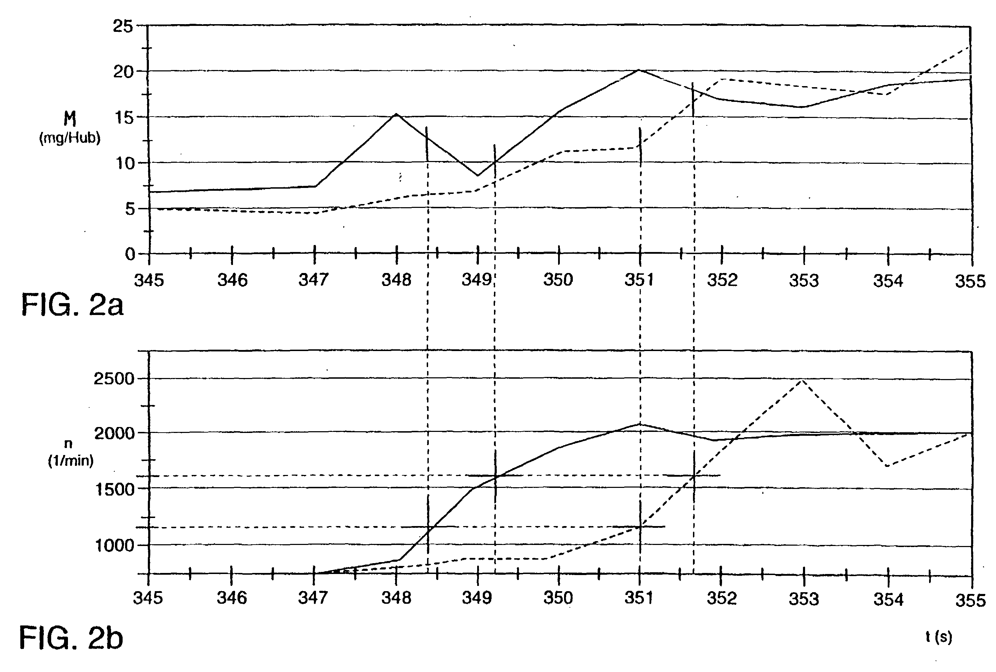

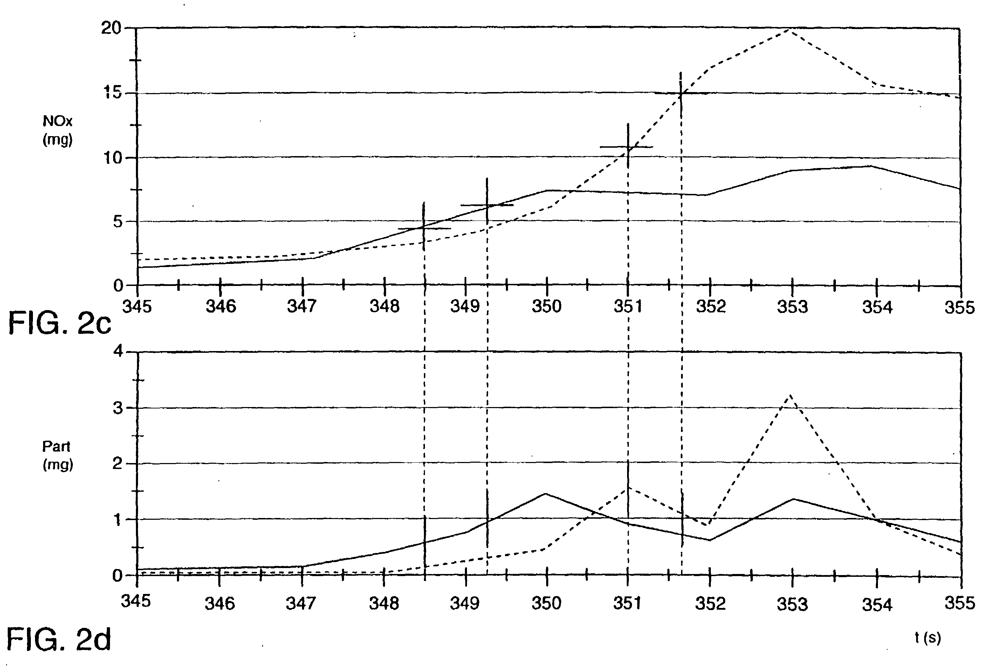

Die Figuren 2a - d zeigen die Auswirkungen einer Mengenreduzierung bei einer Beschleunigungsphase eines Abgastests. Dargestellt ist die Zeit t in Sekunden, und zwar die Sekunden 345 - 355, wobei die gestrichelten Kurven jeweils ein Fahrzeug mit Handschaltung und ohne Mengenbegrenzung wiedergeben, während die durchgezogenen Kurven ein Fahrzeug mit einem schnellverstellenden CVT-Getriebe und einer Mengenbegrenzung wiedergeben.

Fig. 2a zeigt die eingespritzte Kraftstoffmenge M in mg pro Hub in dem angegebenen Zeitintervall während der Beschleunigungsphase.

Fig. 2b zeigt den Drehzahlverlauf n in 1/min im besagten Intervall.

Fig. 2b zeigt die Emission von NOx während des Intervalls. Es ist deutlich zu erkennen, daß durch die Mengenreduzierung erheblich weniger NOx erzeugt wird.

Fig. 2d zeigt die Emission von Partikeln Part in mg, d.h. im Fall eines Dieselmotors Rußpartikel, in dem betrachteten Zeitintervall. Auch hier emittiert der Motor ohne Mengenbegrenzung deutlich mehr Partikel als der mengenbegrenzte Vorgang.

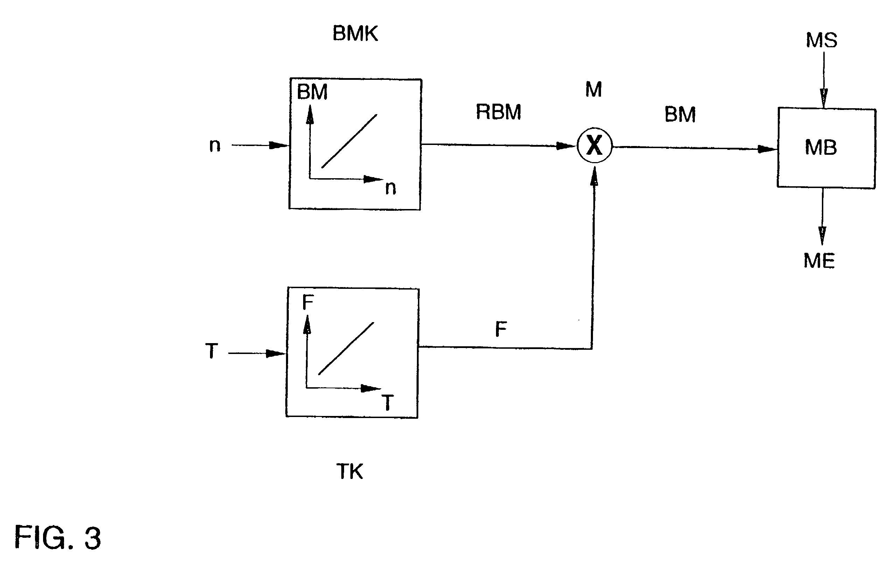

Fig. 3 zeigt ein Blockschema des Verfahrens. Anhand der aktuellen Drehzahl n entnimmt das Steuergerät (nicht dargestellt) des Triebstrangs die entsprechende Mengenbegrenzung der eingespeicherten Begrenzungskennlinie BMK, in der die Begrenzungsmenge BM als Funktion der Drehzahl n dargestellt ist, und gibt den Rohwert RBM der Begrenzungsmenge aus. Da sowohl die Motortemperatur als auch die Getriebetemperatur T Einfluß auf das Emissionsverhalten des Motors haben, kann der Einfluß dieser Größen auf die Begrenzungsmenge beispielsweise in einem Multiplizierer M geltend gemacht werden, der diesen Einfluß in Form eines Faktors F aus dem geschlossenen Intervall [0, 1] mit dem Rohwert RBM der Begrenzungsmenge multipliziert. Folglich entnimmt das Steuergerät mittels der gemessenen Temperatur T des Motors und/oder des Getriebes einer entsprechenden, im Steuergerät gespeicherten Temperaturkennlinie TK, in der der Faktor F als Funktion der Temperatur T aufgetragen ist, den (die) notwendigen Faktor (Faktoren). Die am Ausgang des Multiplizierers M auftretende Begrenzungsmenge BM wird zusammen mit der Mengenangabe MS des Steuergeräts in einen Mengenbegrenzer MB gegeben, der das Minimum der beiden Eingangsinformationen BM und MS bildet und diese Information als die einzuspritzende Kraftstoffmenge ME an die Einspritzpumpe abgibt.

### BEZUGSZEICHENLISTE

- BM: Begrenzungsmenge
- BMK: Begrenzungsmengenkennlinie
- EM: Einspritzmenge
- F: Faktor
- M: Menge pro Hub
- M: Multiplizierer
- MB: Minimumbildner
- ME: Menge Einspritzpumpe
- MS: Menge Steuergerät
- n: Drehzahl
- Part: Partikel
- RBM: Rohwert der Begrenzungsmenge
- T: Temperatur
- t: Zeit in Sekunden
- TK: Temperaturkennlinie

## Patentansprüche

1. Verfahren zum Vermindern der Emissionen bei einem aus Einspritz-Motor mit einem steuerbaren Drehmomentaufbau sowie CVT-Getriebe bestehenden Triebstrang, wobei Bereiche hoher Emissionen in einem Emissionskennfeld beim Beschleunigen durch geeignetes Steuem des Drehmomentaufbaus umgangen werden, **dadurch gekennzeichnet, daß** die Kraftstoff-Einspritzmenge für mindestens einen Drehzahlbereich begrenzt wird.

2. Verfahren nach Anspruch 1, **dadurch gekennzeichnet, daß** die Mengenbegrenzung in Form einer Kennlinie (BMK) vorliegt, die die Begrenzungsmenge (BM) als Funktion der Drehzahl (n) wiedergibt.

3. Verfahren nach einem der vorangegangenen Ansprüche, **dadurch gekennzeichnet, daß** die Einspritzmenge als Funktion der Motor- und/oder Getriebetemperatur (T) begrenzt wird.

4. Verfahren nach Anspruch 3, **dadurch gekennzeichnet, daß** die Funktion der Motoir- und/oder Getriebetemperatur in Form eines Faktors (F) mit der Begrenzungsmenge (RBM) einer bestimmten Drehzahl (n) multipliziert wird.

5. Verfahren nach Anspruch 5, **dadurch gekennzeichnet, daß** der Faktor (F) eine Zahl des geschlossenen Intervalls [0, 1] ist.

6. Vorrichtung zur Durchführung des Verfahrens nach einem der Ansprüche 1 - 5, **dadurch gekennzeichnet, daß** die Vorrichtung ein Steuereinheit zum Steuern des Triebstrangs aufweist.

7. Vorrichtung nach Anspruch 6, **dadurch gekennzeichnet, daß** die Steuereinheit eine Mengenbegrenzungskennlinie (MBK) gespeichert hat.

8. Vorrichtung nach Anspruch 7, **dadurch gekennzeichnet, daß** die Steuereinheit eine Temperaturkennlinie (TK) des Motors und/oder des Getriebes gespeichert hat.

9. Vorrichtung nach Anspruch 8, **dadurch gekennzeichnet, daß** die Vorrichtung einen Multiplizierer (M) und einen Minimumbildner (MB) aufweist

## Claims

1. Method for reducing the emissions in a drive train composed of an injection engine with a controllable build-up of torque and a continuously variable transmission, regions of high emissions being avoided in an emission characteristic diagram during acceleration by suitably controlling the build-up of torque, **characterized in that** the fuel injection quantity is limited for at least one rotational speed range.

2. Method according to Claim 1, **characterized in that** the quantity limitation is present in the form of a characteristic curve (BMK) which represents the limitation quantity (BM) as a function of the rotational speed (n).

3. Method according to one of the preceding claims, **characterized in that** the injection quantity is limited as a function of the engine temperature and/or transmission temperature (T).

4. Method according to Claim 3, **characterized in that** the function of the engine temperature and/or transmission temperature is multiplied, in the form of a factor (F), by the limitation quantity (RBM) of a specific rotational speed (n).

5. Method according to Claim 5, **characterized in that** the factor (F) is a number of the closed interval [0, 1].

6. Device for carrying out the method according to one of Claims 1-5, **characterized in that** the device has a control unit for controlling the drive train.

7. Device according to Claim 6, **characterized in that** the control unit has stored a quantity limitation characteristic curve (MBK).

8. Device according to Claim 7, **characterized in that** the control unit has stored a temperature characteristic curve (TK) of the engine and/or of the transmission.

9. Device according to Claim 8, **characterized in that** the device has a multiplier (M) and a minimum value former (MB).

## Revendications

1. Procédé pour diminuer les émissions d'un train d'entraînement constitué d'un moteur à injection avec asservissement de l'établissement du couple de rotation, ainsi que d'une transmission CVT, des zones à hautes émissions d'un champ de caractéristiques d'émissions étant évitées par un asservissement approprié de l'établissement du couple de rotation lors de l'accélération, **caractérisé en ce que** la quantité injectée de carburant est limitée dans au moins une plage de régimes de rotation.

2. Procédé selon la revendication 1, **caractérisé en ce que** la limitation de la quantité se présente sous la forme d'une ligne caractéristique (BMK) qui donne la quantité limitée (BM) en fonction du régime de rotation (n).

3. Procédé selon l'une des revendications précédentes, **caractérisé en ce que** la quantité injectée est limitée en fonction de la température (T) du moteur et/ou de la transmission.

4. Procédé selon la revendication 3, **caractérisé en ce que** la fonction de la température du moteur et/ou de la transmission, qui présente la forme d'un facteur (F), est multipliée par la quantité limitée (RBM) d'un régime de rotation (n) défini.

5. Procédé selon la revendication 5, **caractérisé en ce que** le facteur (F) est un nombre compris dans l'intervalle fermé [0, 1].

6. Dispositif en vue de la mise en oeuvre du procédé selon l'une des revendications 1 à 5, **caractérisé en ce que** le dispositif présente une unité de commande pour la commande du train d'entraînement.

7. Dispositif selon la revendication 6, **caractérisé en ce que** l'unité de commande possède en mémoire une ligne caractéristique de limitation de la quantité (MBK).

8. Dispositif selon la revendication 7, **caractérisé en ce que** l'unité de commande possède en mémoire une ligne caractéristique de la température (TK) du moteur et/ou de la transmission.

9. Dispositif selon la revendication 8, **caractérisé en ce que** le dispositif présente un multiplicateur (M) et un dispositif de formation de minimum (MB).
